# EUROPÄISCHE PATENTSCHRIFT

(11) **EP 1 139 901 B1**
(45) Veröffentlichungstag und Bekanntmachung des Hinweises auf die Patenterteilung: **10.03.2004**
(21) Anmeldenummer: 00918891.3
(22) Anmeldetag: 19.04.2000
(51) Int. Cl.: A61C 3/14

(54) **VORRICHTUNG ZUR ZERSTÖRUNG EINES ZAHNES**
DEVICE FOR DESTROYING A TOOTH
DISPOSITIF POUR DETRUIRE UNE DENT

(30) Priorität: 03.05.1999 DE 29907819 U; 11.08.1999 DE 29914040 U; 25.08.1999 DE 29914832 U
(43) Veröffentlichungstag der Anmeldung: 10.10.2001
(73) Patentinhaber: Langer, Horst, 33178 Borchen (DE); Bohnenkamp, Iris, 33649 Bielefeld (DE)
(72) Erfinder: Langer, Horst, 33178 Borchen (DE); Bohnenkamp, Iris, 33649 Bielefeld (DE)
(74) Vertreter: Böhme, Ulrich, Dr. Dipl.-Phys.
(86) Internationale Anmeldenummer: PCT/EP2000/003531
(87) Internationale Veröffentlichungsnummer: WO 2000/066024

(56) Entgegenhaltungen:
- DE-A- 3 733 634
- DE-A- 19 646 097
- DE-C- 603 210

## Beschreibung

Die Erfindung betrifft eine Vorrichtung zur querkraftund biegemomentfreien Zerstörung eines Zahnes mit einem in eine Bohrung des Zahnes einführbaren Zerlegedorn.

Eine Komplikation bei der Extraktion von Weisheitszähnen kann die retinierte Lage des Zahnes sein, d.h. der Weisheitszahn liegt weitgehend horizontal im Kieferbett, die Wurzeln zum Kiefergelenk weisend. Bei der Extraktion dieser retinierten Weisheitszähne wird weit verbreitet eine Standardmethode angewandt: Da der Zahn als Ganzes kaum aus dem Kieferknochen entfernt werden kann, wird er in mehrere Teilstücke zerlegt. Nach dem Öffnen der Zahnhöhle durch Auffräsen des Deckels über dem Zahn wird mittels Bohren oder Fräsen ein etwa zylindrisches Loch in den Zahn eingebracht von etwa 2 bis 3 mm Durchmesser. Üblicherweise wird jetzt mit Hilfe eines in die Bohrung passenden Dornes mit einer Länge von etwa 15 bis 20 cm, an dessen hinterem Ende ein knaufartiger Griff sitzt, unter Anwendung von quergerichteten Handkräften und unter Ausnützung der Hebelwirkung des knaufartigen Griffes so lange der Dorn in der Bohrung gewaltsam hin- und her gebogen, bis der Zahn bricht. Meist sind weitere Bohrungen und weiteres brechstangenähnliches Hebeln notwendig, bis der Zahn in hinreichend kleine Stücke zerlegt ist und bis alle Teile des Zahnes mit Zangen oder Pinzetten aus der Zahnbetthöhle entfernt werden können.

Die beschriebene, gewaltsame Einwirkung auf den Zahn wirkt natürlich weiter auf den Kiefer und den Kopf des Patienten. Die Folgen dieser robusten Behandlung können vielfältig sein:
1. Wegen der aufgefrästen Zahnhöhle ist der Kiefer an dieser Stelle kerbgeschädigt, und die Gefahr eines Kieferbruches, die deshalb an sich schon groß ist, wird durch die eingeleiteten Kräfte und Biegemomente noch vergrößert.
2. Da der Patient die einwirkenden Biegemomente auch dann nicht abfangen kann, wenn er unter Narkose steht, werden diese Biegemomente weitergeleitet und von Hals und Wirbelsäule aufgenommen. Die Folge können intensive Hämatome im Hals- und Kehlkopfbereich sein.
3. Steht der Patient nicht unter Narkose, erlebt er die Gewalteinwirkung und nimmt die knochenbrechenden, knirschenden Geräusche voll wahr. Dies kann zu dokumentierten traumatischen Zuständen nach der Operation führen.

Aus der DE 196 46 097 A1 ist ein zangenartiges Instrument zur Entfernung eines Zahnes bekannt, welches über eine Hubeinrichtung eine Kraft in Längsrichtung des zu extrahierenden Zahnes erzeugt, so daß die Entfernung des Zahnes querkraft- und biegemomentfrei erfolgen kann. Der Zahn wird aber als Einheit entfernt, und dies ist nicht in allen Fällen möglich, insbesondere dann nicht, wenn die Wurzeln quer zur Auszugsrichtung gerichtet sind. Eine Zerlegung des Zahns ist mit dieser Vorrichtung nicht möglich.

Es ist Aufgabe der Erfindung, eine Vorrichtung der gattungsgemäßen Art so auszubilden, daß eine Zerstörung des Zahnes möglich wird, ohne daß auf den Patienten Querkräfte und Biegemomente der beschriebenen Art ausgeübt werden, so daß die beschriebenen und hinreichend bekannten Nachteile und Folgen vermieden werden können.

Diese Aufgabe wird bei einer Vorrichtung der eingangs beschriebenen Art erfindungsgemäß dadurch gelöst, daß die Außenabmessungen des Zerlegedornes derart vergrösserbar sind, daß der Zahn durch Aufbringen symmetrischer Kräfte in der Bohrung durch Innendruck gesprengt und dadurch zerlegt wird.

Im Gegensatz zu dem bekannten, in die Bohrung einführbaren Zerlegedorn, der lediglich dazu dient, den Zahn mit Querkräften und Biegemomenten zu beaufschlagen, wird also bei der beschriebenen Vorrichtung der in die Bohrung des Zahnes eingeführte Zerlegedorn in seinen Außenabmessungen vergrößert, so daß er die Bohrung aufweitende Innenkräfte auf den Zahn ausübt, die diesen schließlich sprengen und somit in Teile zerlegen. Dabei werden keinerlei Biegemomente oder Querkräfte auf den Patienten ausgeübt, die auf den Zahn wirkenden Kräfte werden allein von dem Zahn selbst aufgenommen, der aber keine Außenkräfte erfährt, die ihn gegenüber dem Kiefer zu verschieben trachten.

Dieses Prinzip des querkraftfreien und damit biegemomentfreien Kraftaufbringens durch Innendruck ist in der Technik an sich hinreichend bekannt, z.B. beim Zerlegen von Gesteinsblöcken durch Wasserdruck in Bohrungen oder durch schockgefrorenes Wasser oder auch nur zum zerstörungsfreien Aufweiten bei Kegelpreßsitzen mittels Drucköl.

Bei einer ersten bevorzugten Ausführungsform ist vorgesehen, daß der Zerlegedorn zwei gegeneinander bewegbare Teile mit Aufgleitflächen umfaßt, die bei der Bewegung der Teile gegeneinander aneinander gleiten und dadurch die Außenabmessungen des Zerlegedornes vergrößern.

Beispielsweise kann ein Teil eine geschlitzte Hülse und das andere ein darin verschieblicher, zentrischer Ziehoder Druckdorn mit einer kegelförmigen Erweiterung sein, welche eine Aufgleitfläche bildet. Verschiebt man den Zieh- oder Druckdorn gegenüber der geschlitzten Hülse, so tritt die kegelförmige Erweiterung in das Innere der geschlitzten Hülse ein und weitet diese auf. Die Hülse selbst kann ebenfalls eine kegelige Aufgleitfläche aufweisen.

Bei einer anderen Ausgestaltung wird ein Teil als feststehender Halbdorn und das andere Teil als verschiebbarer Zieh- oder Druckdorn ausgeführt, wobei beide Teile als Aufgleitflächen aufeinandergleitende Keilflächen tragen. Werden die beiden Teile in axialer Richtung gegeneinander verschoben, gleiten die Keilflächen aufeinander auf und drücken die beiden Teile unter Vergrößerung ihrer Außenabmessungen auseinander.

Bei einer weiteren bevorzugten Ausführungsform können die beiden Teile blindnietenähnlich ausgebildet sein. Diese Ausgestaltung ermöglicht es insbesondere, eine gleichmäßige Pressung über den Umfang der Bohrung einzuleiten.

Besonders vorteilhaft ist es, wenn die Vorrichtung ein zangenförmiges Werkzeug ist, das nachfolgend als Sprengzange bezeichnet wird, und wenn die beiden Teile durch zwei gegeneinander verschwenkbare Zangengriffe der Sprengzange gegeneinander bewegbar sind. Es ist dann in sehr einfacher Weise möglich, allein durch Verschwenkung der Zangengriffe gegeneinander die beiden Teile so gegeneinander zu bewegen, daß deren Außenabmessungen zum Sprengen des Zahnes vergrößert werden können.

Bei einer bevorzugten Ausführung ist dabei vorgesehen, daß die Sprengzange einen Ratschenmechanismus enthält, durch den der vollständige Hub der Zangengriffe auf einen kleinen Teilhub der beiden Teile gegeneinander transformiert wird. Bei der Vergrößerung der Außenabmessungen der Teile durch Relativverschiebung der beiden Teile zueinander kann der Operateur dadurch sehr feinfühlig vorgehen, daß er nicht in einem einzigen Hub die volle Verschiebung der beiden Teile gegeneinander vornimmt, sondern daß er eine Vielzahl kleiner Teilhübe aneinander anschließt, wobei die Zangengriffe wiederholt über ihren vollständigen Hub bewegt werden. Der Ratschenmechanismus kann einen Kniehebel umfassen, der mit seinem freien Ende in eine Verzahnung eingreift.

Es ist weiterhin vorteilhaft, wenn die beiden Zangengriffe in eine Löseposition verschwenkbar sind, in der die beiden Teile derart gegeneinander verschoben sind, daß ihre Außenabmessungen reduziert sind. Dies ist insbesondere dann von Vorteil, wenn der aufgeweitete Zerlegedorn wieder aus der Bohrung entfernt werden muß, beispielsweise bei nicht erfolgreicher Zerlegung des Zahnes. Durch eine entsprechende Bewegung der beiden Teile gegeneinander, die durch das Verschwenken der Zangengriffe in die Löseposition ausgelöst wird, verringern sich die Außenabmessungen der beiden Teile, so daß die kraftschlüssige Anlage der beiden Teile an der Innenwand der Bohrung im Zahn aufgehoben wird.

Bei einer besonders bevorzugten Ausführungsform ist vorgesehen, daß die beiden Teile bei der Vergrößerung der Außenabmessungen nach entgegengesetzten Seiten voneinander entfernbar sind und daß der Zerlegedorn um seine Längsachse verdrehbar an der Vorrichtung gelagert ist. Bei einer solchen Ausgestaltung werden die auf den Zahn ausgeübten Sprengkräfte im wesentlichen in einer Ebene auf den Zahn übertragen, die durch die Bewegung der beiden Teile definiert wird. Diese Ebene kann durch Drehung des Zerlegedorns um die Längsachse ebenfalls gedreht werden, und dies führt dazu, daß der Operateur die Richtung der Sprengkräfte einstellen kann.

Bei einer weiteren bevorzugten Ausführungsform kann vorgesehen sein, daß die beiden Teile zur Veränderung der Außenabmessungen des Zerlegedornes durch einen hydraulischen Antrieb gegeneinander bewegbar sind.

Dieser hydraulische Antrieb kann zur Erzeugung des Betätigungsdruckes für den hydraulischen Antrieb vorzugsweise eine motorisch angetriebene Pumpe umfassen oder einen hand- oder fußbetätigten Hydraulikkolben.

Es ist dabei vorteilhaft, wenn die Vorrichtung ein Gehäuse aufweist, welches den Zerlegedorn trägt und eine Betätigungs- und Versorgungseinheit aufnimmt, und wenn das Gehäuse zusammen mit einem daran gelagerten Handhebel ein zangenähnliches Handwerkzeug bildet. Es ergibt sich dann ein sehr handliches Werkzeug, das zangenähnlich bedienbar ist und die Teile des Zerlegedorns hydraulisch gegeneinander verschiebt.

Bei einer anderen Ausführungsform kann vorgesehen sein, daß der Antrieb über einen Schlauch mit einer Betätigungs- und Versorgungseinheit verbunden ist. Dabei kann die Verbindung zwischen dem Schlauch und der Betätigungs- und Versorgungseinheit vorzugsweise als Steckverbindung ausgebildet sein.

Bei einer weiteren Ausgestaltung einer Vorrichtung mit hydraulisch gegeneinander verschiebbaren Teilen kann vorgesehen sein, daß der hydraulische Antrieb einen in einer Buchse abgedichtet verschiebbaren Kolben umfaßt, an dem eines der beiden verschiebbaren Teile gehalten ist, also ein hydraulisches Kolbenzylinderaggregat.

Dabei ergibt sich ein besonders einfacher Aufbau, wenn in der Buchse auf einer Seite des Kolbens eine Zuführung für ein hydraulisches Medium angeordnet ist und wenn der Kolben bei Zufuhr von hydraulischem Medium über diese Zuführung gegen die Wirkung einer Feder in der Buchse verschiebbar ist. Bei einer solchen Ausgestaltung wird also der Kolben in einer Richtung durch Zufuhr von hydraulischem Medium verschoben, in der Gegenrichtung dagegen von einer Feder, die bei der Verschiebung des Kolbens durch das hydraulische Medium gespannt wird.

Bei einer anderen Ausgestaltung kann dagegen vorgesehen sein, daß in der Buchse auf beiden Seiten des Kolbens je eine Zuführung für ein hydraulisches Medium angeordnet ist, der Kolben wird also doppeltwirkend von hydraulischem Medium angetrieben.

Eine besonders günstige Ausführung ergibt sich, wenn der Kolben durch einen Faltenbalg gegenüber der Buchse abgedichtet ist. Es ist dann möglich, als hydraulisches Medium nicht nur physiologisch unbedenkliche Flüssigkeiten zu verwenden, beispielsweise Wasser, sondern auch andere Flüssigkeiten, die mit dem Körper nicht in Kontakt kommen sollten, beispielsweise synthetische Flüssigkeiten.

Bei einer weiteren bevorzugten Ausführungsform ist vorgesehen, daß der hydraulische Antrieb einen zwischen den beiden Teilen angeordneten, mit Hydraulikmedium füllbaren Balg umfaßt, der bei Füllung die beiden Teile unter Vergrößerung ihrer Außenabmessungen voneinander entfernt. Dieser Balg wird bei Füllung mit hydraulischem Medium wie ein Ballon aufgeblasen und drängt dadurch die beiden Teile auseinander. Diese legen sich dadurch an der Innenwand der Bohrung im Zahn an und übertragen Sprengkräfte auf die Innenwand der Bohrung.

Insbesondere können die beiden Teile auseinanderschwenkbar gelagert sein.

Es ist auch günstig, wenn die beiden Teile federunterstützt sind, so daß bei Entleerung des Balges die beiden Teile unter Reduzierung ihrer Außenabmessungen wieder einander angenähert werden.

Bei einer weiteren bevorzugten Ausgestaltung einer erfindungsgemäßen Vorrichtung umfaßt der Zerlegedorn einen mit einem hydraulischen Medium füllbaren Balg. Dieser Balg kann unmittelbar in die Bohrung des Zahnes eingeführt werden und legt sich bei Füllung mit hydraulischem Medium an die Innenwand der Bohrung an, bei weiterer Füllung werden dadurch Sprengkräfte auf die Innenwand der Bohrung des Zahnes ausgeübt, die diesen schließlich zerlegen.

Der Balg kann beispielsweise kugelförmig oder zylinderförmig ausgebildet sein.

Günstig ist es, wenn der Balg seitlich aufgesetzte Kerbstücke trägt, die an der Innenwand der Bohrung zur Anlage kommen und die Zerstörung des Zahnes fördern.

Vorzugsweise ist der Balg dehnbar ausgebildet.

Die nachfolgende Beschreibung bevorzugter Ausführungsformen der Erfindung dient im Zusammenhang mit der Zeichnung der näheren Erläuterung. Es zeigen:
- Figur 1:: eine Sprengzange in Seitenansicht;
- Figur 2:: ein erstes bevorzugtes Ausführungsbeispiel des in Figur 1 mit einem Kreis markierten Zangenkopfes der Sprengzange;
- Figur 3:: eine Ansicht ähnlich Figur 2 bei einem abgewandelten Ausführungsbeispiel eines Zangenkopfes;
- Figur 4:: eine schematische Seitenansicht einer Sprengeinheit mit einem Sprengkopf, einer Versorgungs- und Betätigungseinheit und einer Schlauchverbindung zwischen Sprengkopf und Versorgungs- und Betätigungseinheit;
- Figur 5:: eine Ansicht ähnlich Figur 3 bei einem abgewandelten Ausführungsbeispiel einer Sprengeinheit;
- Figur 6:: eine Ansicht ähnlich Figur 4 bei einem weiteren bevorzugten Ausführungsbeispiel einer Sprengeinheit;
- Figur 7:: eine Schnittansicht eines ersten bevorzugten Ausführungsbeispiels eines Sprengkopfes mit einem doppeltwirkenden hydraulischen Antrieb;
- Figur 8:: eine Ansicht ähnlich Figur 7 mit einer abgewandelten Ausbildung des Zerlegedorns;
- Figur 9:: eine Ansicht ähnlich Figur 7 mit einer Faltenbalgdichtung;
- Figur 10:: eine Ansicht ähnlich Figur 8 mit einer Faltenbalgdichtung;
- Figur 11:: eine Ansicht ähnlich Figur 7 mit einem einfachwirkenden hydraulischen Antrieb und einer Rückstellfeder;
- Figur 12:: eine Ansicht ähnlich Figur 8 mit einem einfachwirkenden hydraulischen Antrieb und einer Rückstellfeder;
- Figur 13:: eine Ansicht ähnlich Figur 9 mit einem einfachwirkenden hydraulischen Antrieb und einer Rückstellfeder;
- Figur 14:: eine Ansicht ähnlich Figur 10 mit einem einfachwirkenden hydraulischen Antrieb und einer Rückstellfeder;
- Figur 15:: eine diagrammatische Darstellung einer Versorgungs- und Betätigungseinheit für einen doppeltwirkenden hydraulischen Antrieb mit einer motorisch angetriebenen Pumpe;
- Figur 16:: eine diagrammatische Ansicht einer Versorgungs- und Betätigungseinheit für einen doppeltwirkenden hydraulischen Antrieb mit einer handbetätigten Pumpe;
- Figur 17:: eine Ansicht ähnlich Figur 15 für einen einfachwirkenden hydraulisch wirkenden Antrieb;
- Figur 18:: eine Ansicht ähnlich Figur 16 für einen einfachwirkenden hydraulisch wirkenden Antrieb;
- Figur 19:: eine schematische Ansicht einer Verschraubung zum Anschluß eines Zerlegedorns in Form eines Balges;
- Figur 20:: eine Längsschnittansicht durch ein erstes bevorzugtes Ausführungsbeispiel eines mit einem hydraulischen Medium füllbaren, balgförmigen Zerlegedorns;
- Figur 21:: eine Ansicht ähnlich Figur 20 bei einem abgewandelten Ausführungsbeispiel eines Zerlegedorns;
- Figur 22:: eine Ansicht ähnlich Figur 21 mit einem Kerbstücke tragenden Zerlegedorn und
- Figur 23:: eine Schnittansicht längs Linie 23-23 in Figur 22.

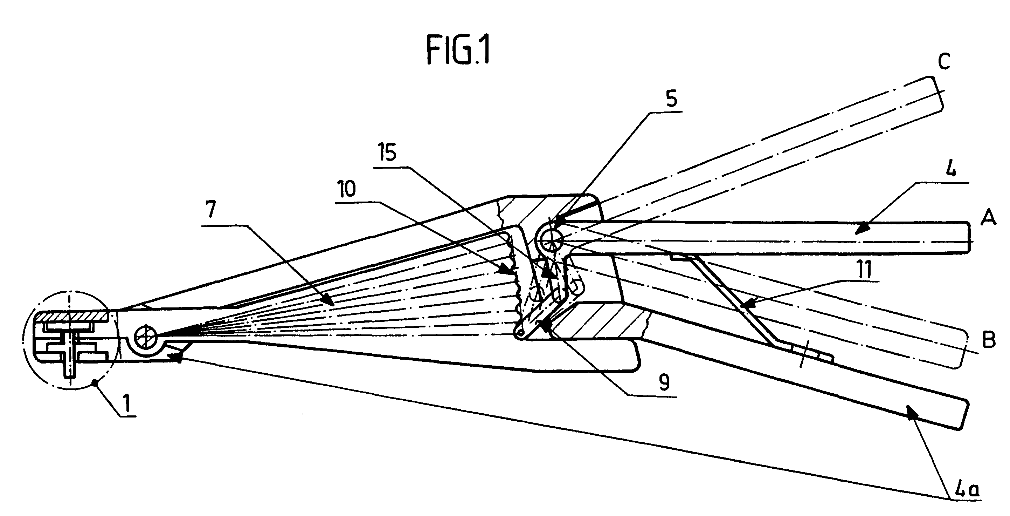

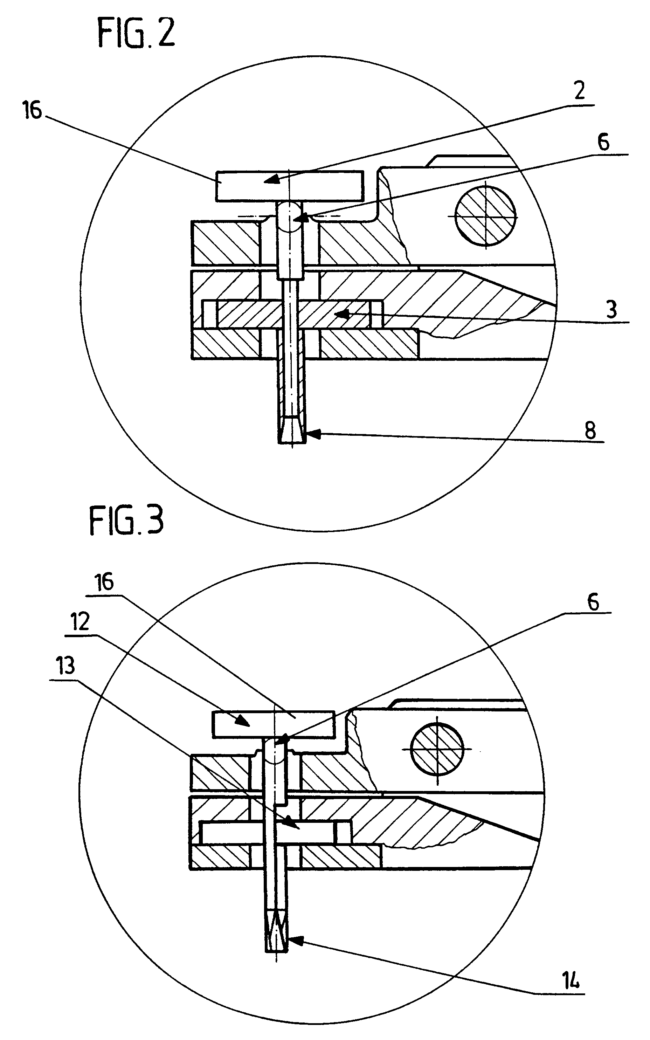

Figur 1 zeigt beispielhaft eine ganze Sprengzange in der Seitenansicht mit der Zangenkopfvariante nach Figur 3. Ein Zangengriff 4 befindet sich darin
bei A in Anfangsposition
bei B am Ende eines Hubes
bei C in Löseposition.

Figur 2 zeigt den Zangenkopf mit dem Zerlegedorn: Ziehdorn 2 und geschlitzte Hülse 3, die die eigentliche Zerlegung im Zahn bewirken, in symmetrischer Ausführung.

Figur 3 zeigt den Zangenkopf mit dem Zerlegedorn: feststehender Halbdorn 13 und Ziehdorn 12 in unsymmetrischer Ausführung.

Je nach Ausführung wird der Zerlegedorn 1 möglichst weit in die vorbereitete Bohrung des Weisheitszahnes gesteckt. Dann werden die Zangengriffe 4, 4a betätigt. Über das Zangengelenk 5 drückt ein Heber 7 mittels der Gelenklager 6 unter den Ziehdorn 2 bzw. 12. Da ein feststehender Teil durch den vorderen Teil des Zangengriffes 4a gehalten wird, verschiebt sich der Ziehdorn 2 bzw. 12 relativ zu ihm.

Bei Ausführung nach Figur 2:
Weil der Ziehdorn 2 eine kegelförmige Erweiterung 8 am freien Ende hat, kann er die geschlitzte Hülse 3 auseinanderdrücken. Dadurch werden zwei symmetrische Kräfte in die Zahnbohrung in Längsrichtung des Zahnes eingeleitet, die bei geeigneter Größe den Zahn sprengen. Die Hülse kann dabei auch eine kegelige Aufgleitfläche aufweisen.

Bei Ausführung nach Figur 3:
Feststehender Haltedorn 13 und Ziehdorn 12 sind als Halbzylinder ausgeführt und haben beide am freien Ende je eine Keilfläche 14, so daß beim Verschieben des Ziehdornes 12 die Keilflächen aufeinandergleiten können und der Abstand der Außenkanten sich vergrößert. Auch hier werden zwei symmetrische Kräfte in die Zahnbohrung in Längsrichtung eingeleitet, die dann bei geeigneter Größe der Kräfte den Zahn sprengen.

Um zu verhindern, daß im Moment des Zahnbruches die gespannte Handkraft die Zahnteile unnötig weit auseinanderdrückt, ist in den Handgriff der Zange ein Ratschenmechanismus 15, 5, 9, 10, 11 integriert; dadurch ist der Hub des Zangengriffes 4 begrenzbar, und die Sprengkräfte werden durch eine Vielzahl kleiner Handhübe erzeugt, wodurch ein Nachfedern oder unkontrollierter Zerlegehub verhindert wird.

Wird der Zangengriff 4 in Löseposition C bewegt, so kann mit dem Heber 7 der Ziehdorn 2, 12 in seine Ausgangslage zurückbewegt werden, und die Zange wird aus dem Zahn herausgenommen. Diese Möglichkeit wird besonders in dem Moment wichtig, wenn aus welchen Gründen auch immer das Sprengen des Zahnes nicht gelang, um dann die Verklemmung des Werkzeuges in der Bohrung zu verhindern.

Da die Herstellung der Bohrung im Zahn mittels Fräser, Bohrer oder Schleifstein nicht zu einem präzisen Durchmesser führen muß, ist es auch denkbar, daß eventuell die Zange nach dem ersten Versuch gegen eine Zange mit einem dickeren Ziehdornmaß ausgewechselt werden muß. Auch in diesem Fall ist die Zurückstellung in den Anfangszustand unabdingbar.

Der Zerlegedorn 1 kann mittels einer Grifffläche 16 um seine Achse verdreht werden, so daß die Richtung der erzeugten Sprengkraft verändert und damit ein richtungsbestimmtes Brechen des Zahnes bewirkt werden kann.

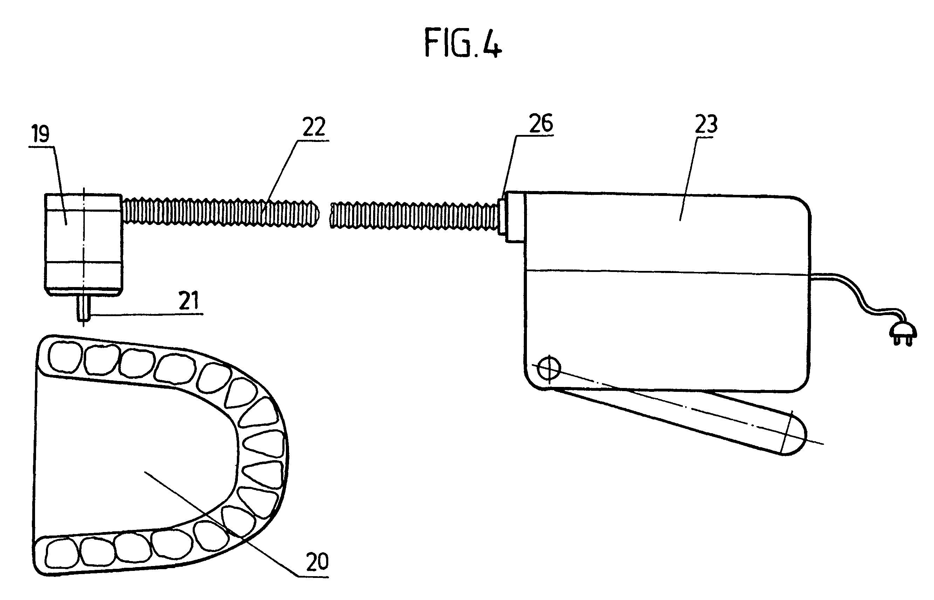

Figur 4 zeigt eine komplette hydraulisch unterstützte Sprengeinheit in ihrer Arbeitsposition. Der Sprengkopf 19 ist zusammen mit einem Schlauch 22 über ein hydraulisches Stecksystem 26 an ein bereits vorhandenes chirurgisches Versorgungssystem 23 angekoppelt.

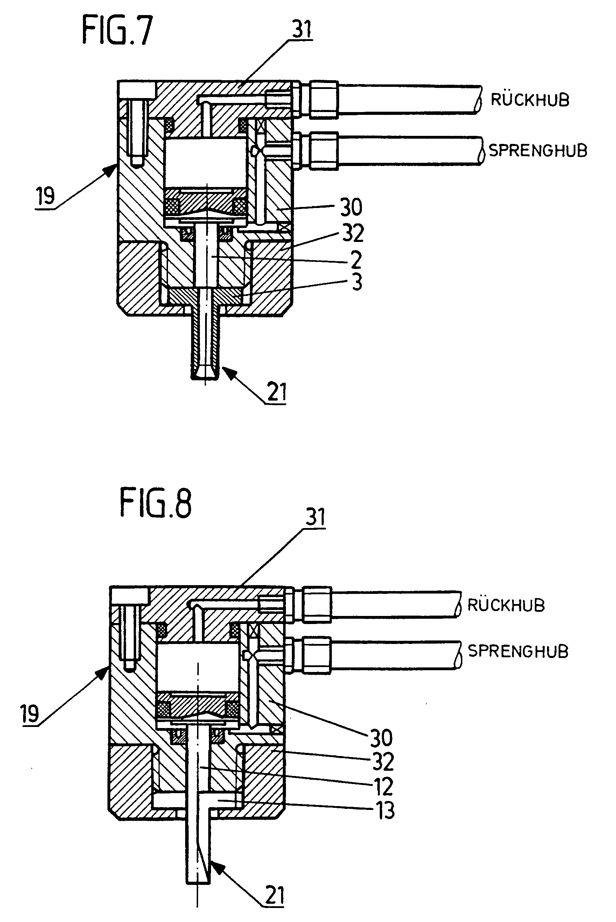

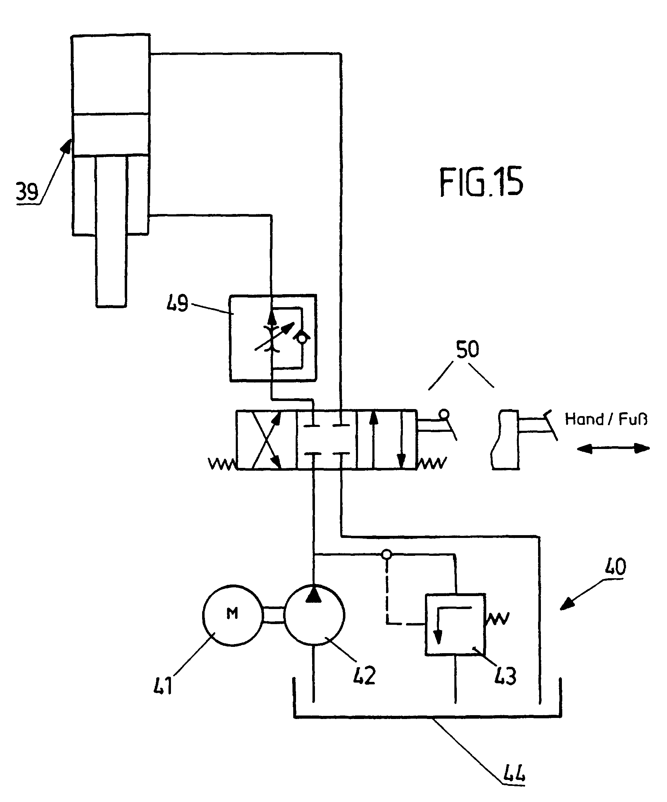

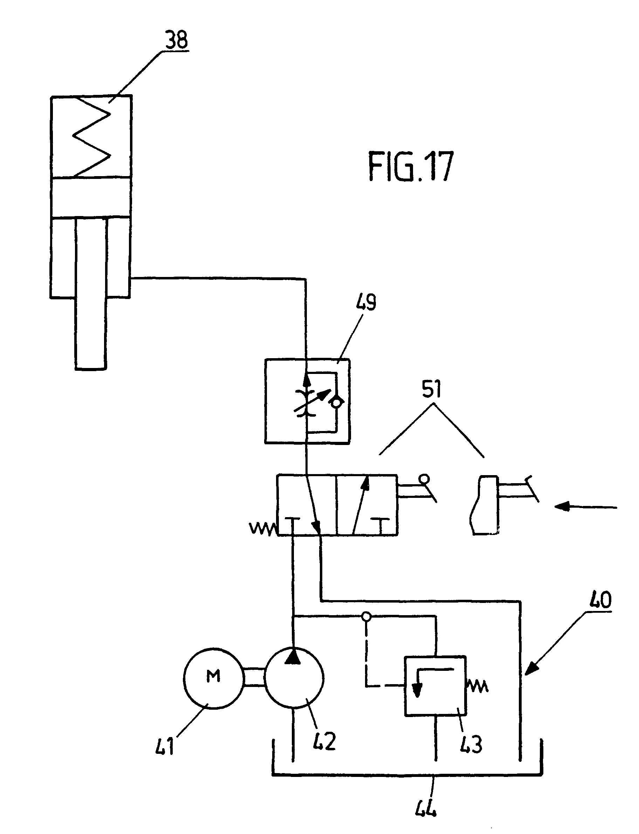

In dem Unterkiefer 20 liegt der angebohrte Weisheitszahn, in den der untere, zylindrische Absatz 21 des Sprengkopfes 19 (Figuren 7 bis 14) eingeführt wird. Ein Schlauch 22, in dem die Versorgungsleitungen liegen, ermöglicht einen großen Handhabungsbereich und verbindet den Sprengkopf mit der Versorgungs- und Betätigungseinheit 23 (Figuren 15, 17), die eine wohldosierte und feinfühlige Sprengung des Zahnes ermöglicht.

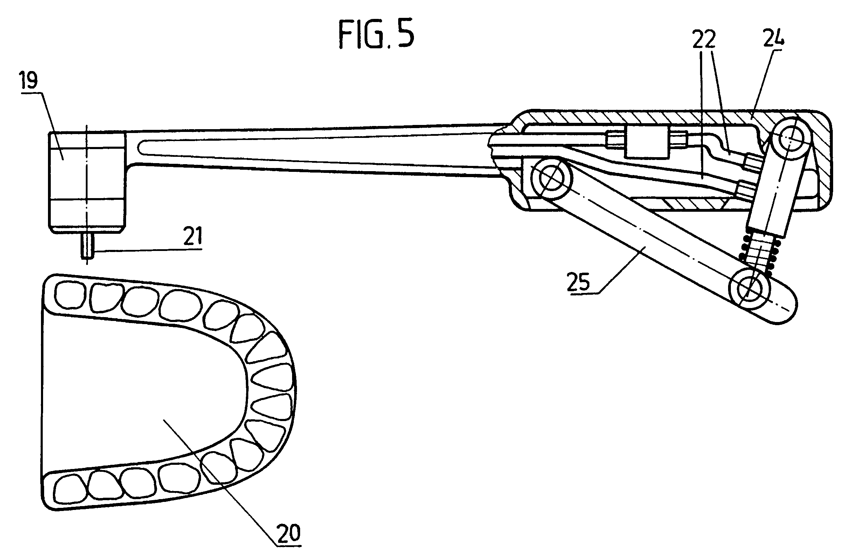

Figur 5 zeigt ein zangenähnliches Handwerkszeug in seiner Arbeitsposition.

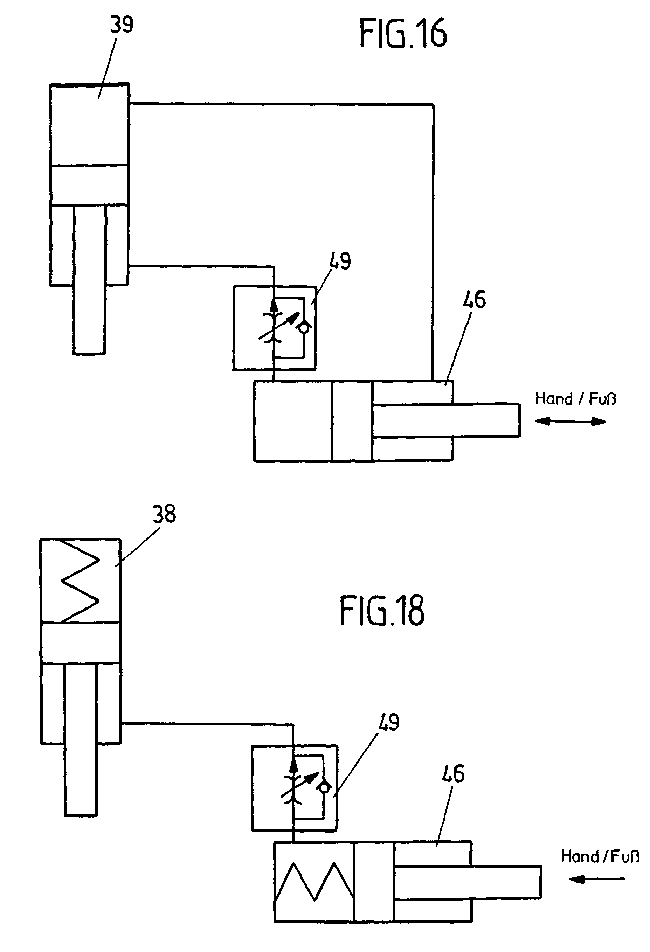

In dem Unterkiefer 20 liegt der angebohrte Weisheitszahn, in den der untere, zylindrische Absatz 21 des Sprengkopfes 19 (Figuren 7 bis 14) eingeführt wird. Die Versorgungsleitungen laufen durch das Gehäuse 24 vom Sprengkopf zum hinteren Teil, in dem sich der Zylinder 46 (Figur 16), der über den Handhebel 25 den hydraulischen Versorgungsdruck für den Spreng- und Rückhub erzeugt, befindet.

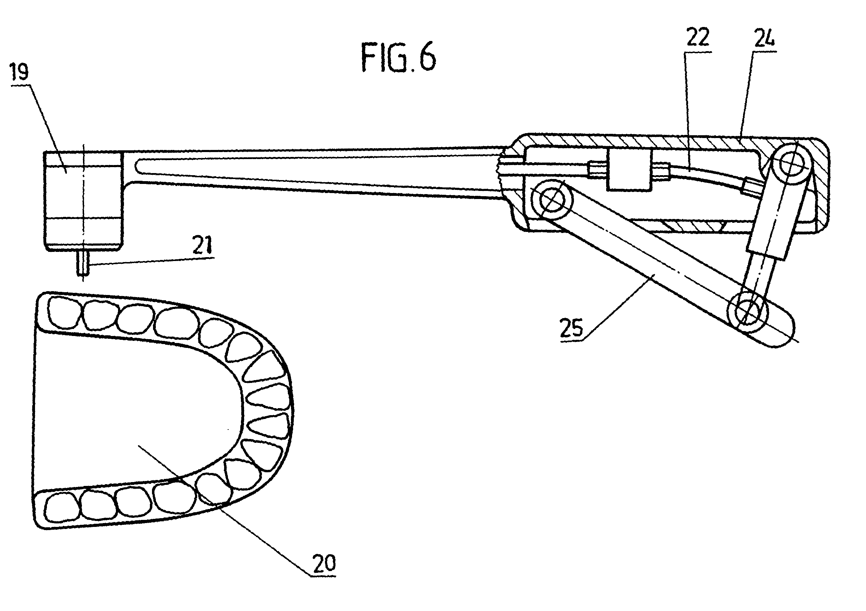

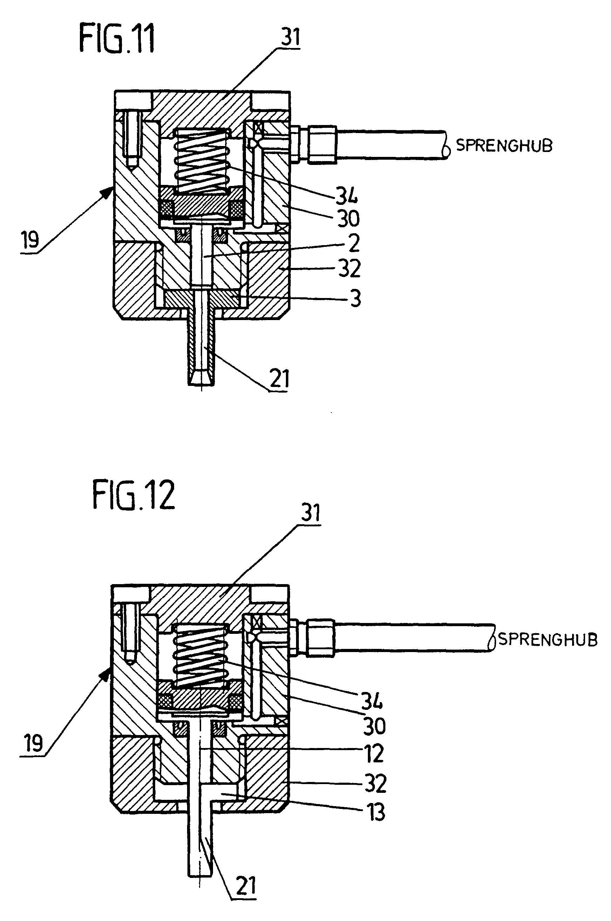

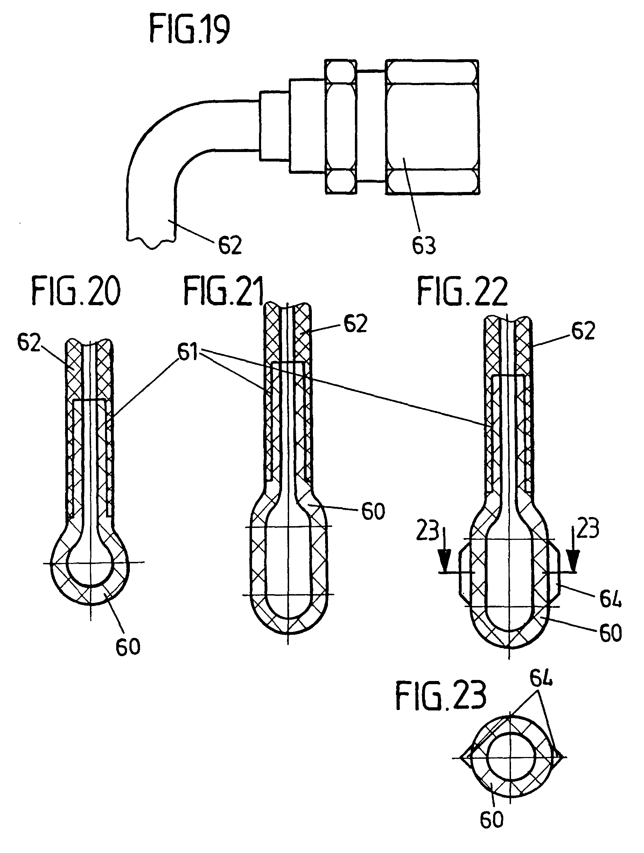

Figur 6 zeigt ein fast identisches Handwerkszeug wie Figur 5, hierbei wurden jedoch die Sprengköpfe 19 (Figuren 11 bis 14) mit einem Versorgungskonzept für einen angesteuerten Sprenghub und einen federunterstützten Rückhub vorgesehen, was Unterschiede im Bereich der Versorgungsleitungen und des Zylinders 46 (Figur 18) im Bereich des Handhebels 25 bedingt.

### Die Sprengköpfe

Figuren 7 und 8 zeigen den hydraulisch (Wasser) unterstützten Sprengkopf in symmetrischer (Figur 7) und unsymmetrischer (Figur 8) Ausführung mit ansteuerbarem Spreng- und Rückhub.

In der symmetrischen Ausführung wird der Ziehdorn 2 hydraulisch nach oben gedrückt, dabei wird die geschlitzte Hülse 3 auseinandergespreizt und symmetrische Kräfte in den Kiefer eingeleitet, die den Zahn zerteilen. Die Zuführung des hydraulischen Mediums (Wasser) erfolgt über einen unteren Anschluß (Sprenghub), anschließend wird es über eine Steuerbuchse 30 auf die untere Kolbenseite des Ziehdornes 2 geleitet, wodurch der Sprenghub ausgeführt wird. Die obere Kolbenseite des Ziehdornes 2 wird über einen oberen Anschluß (Rückhub) versorgt.

Ein Deckel 31 ist mit einer Rückflußbohrung versehen und ein Deckel 32 bietet die Anlagekante für die geschlitzte Hülse.

In der unsymmetrischen Ausführung wird der Ziehdorn 12 hydraulisch nach oben gedrückt und der Halbdorn 13 macht aufgrund der Keilfläche einen seitlichen Hub, wodurch auch hier symmetrische Kräfte in den Zahn eingeleitet werden. Die Zuführung des hydraulischen Mediums (Wasser) erfolgt in gleicher Weise wie bei der symmetrischen Ausführung, das bedeutet, daß folgende Einzelteile identisch sind:
die Steuerbuchsen 30
der Deckel 31 sowie
der Deckel 32.

Alle Dichtungen der Ausführungen gemäß Figur 7 und Figur 8 beruhen auf der Verwendung des hydraulischen Mediums Wasser, wobei ein Austritt von geringen Wassermengen in den Mundbereich zulässig ist.

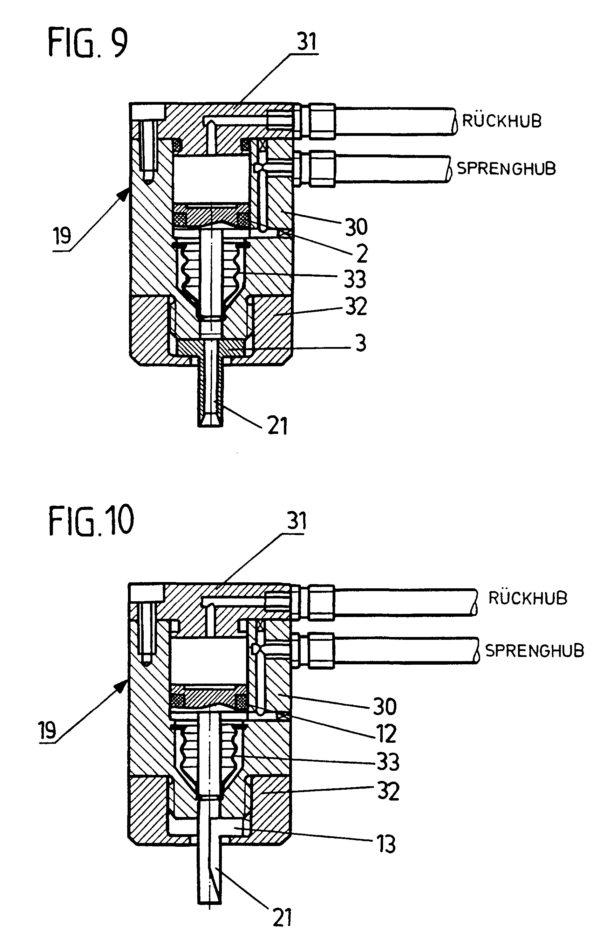

Figuren 9 und 10 zeigen den hydraulisch (synthetische Flüssigkeit) unterstützten Sprengkopf in symmetrischer (Figur 9) und unsymmetrischer (Figur 10) Ausführung mit ansteuerbarem Spreng- und Rückhub.

Die Ausführung der Figur 9 hat das selbe Funktionsprinzip wie das der Figur 7, der entscheidende Unterschied liegt in den verwendeten Dichtungen, die in dieser Ausführung eine absolut leckfreie Einheit auf Grund eines Faltenbalges 33 darstellen.

Die unsymmetrische Ausführung (Figur 10) ist vergleichbar mit der der Figur 8, auch hier zeigt das zu verwendende Medium (synthetische Flüssigkeit) seine Auswirkungen. Ein Faltenbalg 33 schafft die hohe Dichtwirkung.

Die Figuren 11 und 12 zeigen den hydraulisch (Wasser) unterstützten Sprengkopf in symmetrischer (Figur 11) und unsymmetrischer (Figur 12) Ausführung mit ansteuerbarem Sprenghub und federunterstütztem Rückhub.

Die Ausführung der Figur 11 ist vergleichbar mit der der Figur 7, hierbei wurde jedoch der Rückhub des Ziehdornes 2 über eine Druckfeder 34 realisiert. Dadurch entfallen der hydraulische Anschluß und die benötigten Rückflußbohrungen im Deckel 31. Dieselben Änderungen, Druckfeder 34 und Deckel 31, wurden bei der Version der Figur 12 gemacht, die sonst eine absolute Identität, aufgrund des gleichbleibenden Mediums (Wasser), zur Version der Figur 8 aufzeigt.

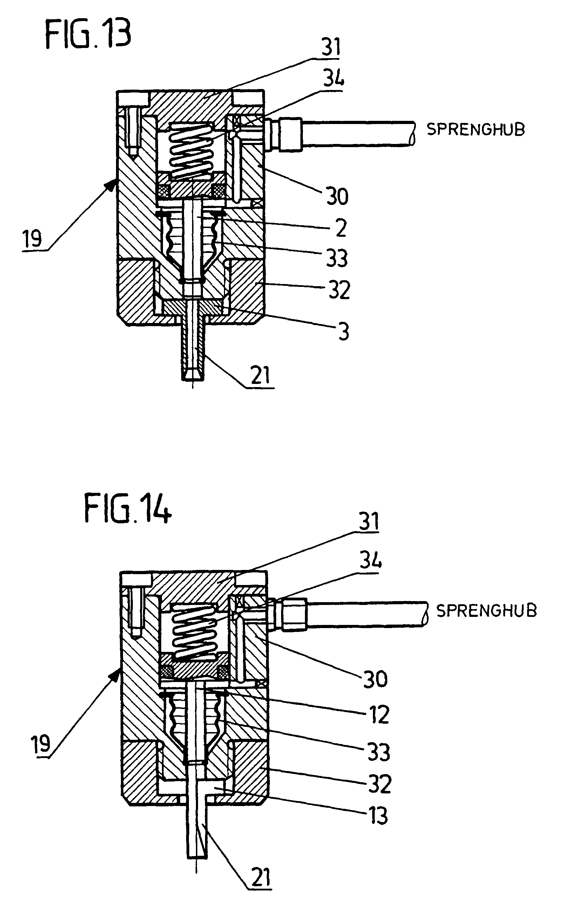

Die Figuren 13 und 14 zeigen den hydraulisch (synthetische Flüssigkeit) unterstützten Sprengkopf in symmetrischer (Figur 13) und unsymmetrischer (Figur 14) Ausführung mit ansteuerbarem Sprenghub und federunterstütztem Rückhub.

Die Konstruktionskriterien der absolut leckfreien Einheit wurden in den Ausführungen der Figuren 13 und 14 mit einem federunterstützten Rückhub kombiniert, so daß in der symmetrischen Ausführung der Faltenbalg 33 und die Druckfeder 34 und in der unsymmetrischen Ausführung der Faltenbalg 33 und die Druckfeder 34 eingebaut wurden.

### Die Versorgungs- und Betätigungseinheit

Figur 15 zeigt ein hydraulisch, schematisches Gesamtkonzept für die fernbetätigten Sprengköpfe der Figuren 7 bis 10 mit ansteuerbarem Spreng- und Rückhub.

Die Versorgung und die Erzeugung des Hydraulikdruckes für den Antrieb der Sprengköpfe der Figuren 7 bis 10, die in Figur 15 als doppeltwirkender Zylinder 39 dargestellt sind, übernimmt ein elektrisches Antriebsaggregat 40, welches sich zusammensetzt aus:
Elektromotor 41
Hydropumpe 42
Druckbegrenzungsventil 43
Behälter 44.

Die Betätigung und Steuerung des Spreng- und Rückhubes erfolgt über ein 4/3 Wegeventil 50, welches für eine Hand- oder Fußbetätigung ausgelegt ist.

Die Feineinstellung für den Sprenghub wird über das Drosselrückschlagventil 49 gewährleistet.

Die Elemente 40, 49 und 50 befinden sich in der Versorgungs- und Betätigungseinheit 23 der Figur 4.

Figur 16 zeigt ein hydraulisches Konzept für die fernbetätigten Sprengköpfe der Figuren 7 bis 10 mit ansteuerbarem Spreng- und Rückhub.

Die Erzeugung des Hydraulikdruckes für den Antrieb der Sprengköpfe der Figuren 7 bis 10, die in Figur 15 als doppeltwirkender Zylinder 39 dargestellt sind, wird über eine manuell betätigte Einheit 46 aufgebracht. Die Feineinstellung des Sprenghubes wird über die Steuereinheit 49 reguliert.

Die Elemente 46, 49 befinden sich in dem Gehäuse 24, und die Betätigung des Zylinders oder Hydraulikkolbens 46 geschieht über den Handhebel 25 (Figur 5).

Figur 17 zeigt ein hydraulisch schematisches Gesamtkonzept für die fernbetätigten Sprengköpfe der Figuren 11 bis 14 mit ansteuerbarem Sprenghub und federunterstütztem Rückhub.

Das Konzept der Figur 17 unterscheidet sich durch den einfachwirkenden Zylinder 38 mit Federrückstellung, die symbolische Darstellung der Sprengköpfe der Figuren 11 bis 14 von dem der Figur 15. Die Betätigungseinheit stellt ein 3/2 Wegeventil 51 dar, weitere Schaltzeichen haben eine identische Bezeichnung und Funktion wie in Figur 15, genauso die Verbindung zu Figur 4, d.h. daß die Schaltelemente 40, 49, 51 in der Einheit 23 untergebracht sind, ist hier gegeben.

Figur 18 zeigt ein hydraulisches Konzept für die fernbetätigten Sprengköpfe der Figuren 11 bis 14 mit ansteuerbarem Sprenghub und federunterstütztem Rückhub.

Die Figur 18 stellt das selbe Grundprinzip wie Figur 16 dar, indem der Hydraulikdruck über die Betätigungseinheit 46 aufgebracht wird und in der die Feinregulierung des Sprenghubes die Steuereinheit 49 übernimmt, die wesentliche Änderung besteht in den angesteuerten Sprengköpfen, die einen federunterstützten Rückhub haben.

Die Anordnung der Einheiten 46, 49 wird in Figur 5 verdeutlicht.

Die Figuren 20 bis 23 zeigen drei verschiedene Formen von Sprengelementen, deren Hauptfunktion, einen rotationssymmetrischen Druck in den Zahn einzuleiten, durch einen dehnbaren Balg 60 gegeben ist.

Der Balg 60 der Figur 20 ist ein kugelförmiger Balg, der in die Zahnbohrung eingeführt wird. Über eine Klebeverbindung 61 ist der Balg mit einem Schlauch 62 und einer Verschraubung 63 verbunden (Figur 19), wodurch eine Möglichkeit geschaffen wird, eine hydraulische Versorgungs- und Betätigungseinheit 23 anzuschließen (Figuren 17, 18).

Wird der Balg mit Druck beaufschlagt, weitet er sich solange, bis er in der Zahnbohrung allseitig anliegt und der Druck auf den Zahn übertragen wird, nach langsamer und feinfühliger Druckerhöhung kommt es anschlie-Bend zum Zahnbruch.

Der Balg 60 der Figur 21 ist ein zylinderförmiger Balg, der sich nur in der Balgform von dem der Figur 20 unterscheidet.

Der Balg 60 der Figur 22 ist ein zylinderförmiger Balg mit seitlich aufgeklebten Kerbstücken 64, die durch ihre spitzwinklige Form (Figur 23) einen richtungsbestimmten Bruch begünstigen.

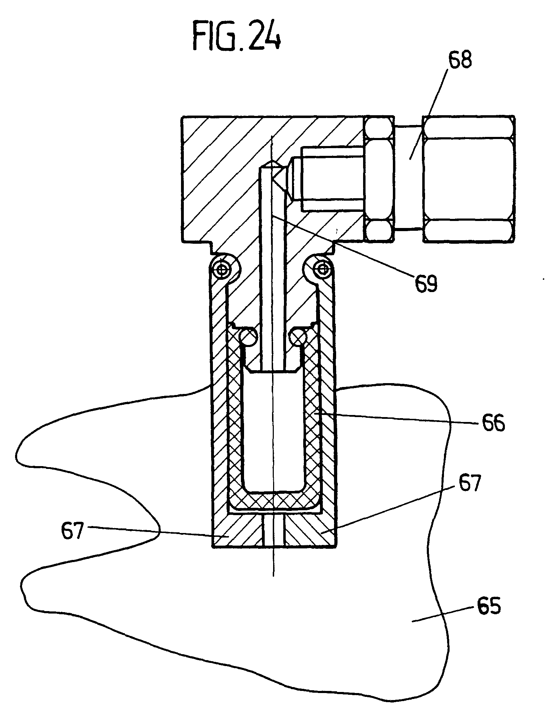

Figur 24 zeigt ein Sprengelement in einem angebohrten Zahn 65, das einen rotationssymmetrischen Druck mittels Balges 66 und mittels Segmentstücken 67 in den Zahn einleitet.

Der benötigte Druck wird über eine Verschraubung 68, die mit einem Versorgungs- und Betätigungssystem 23 kombinierbar ist, einer Steuerbuchse 69 und damit dem Balg 66 zugeführt. Weitet sich der Balg aufgrund des langsam ansteigenden Druckes auf, werden die schwenkbar gelagerten und federunterstützten Segmentstücke 67 auseinander gedrückt. Die einzelnen Segmentstücke 67 drükken gegen die Zahnbohrung und übertragen somit den Druck, der letztendlich zum Bruch des Zahnes führt.

**TEILEBEZEICHNUNG UND TEILENUMMERN**

| | | | | | |
|---|---|---|---|---|---|
| 1 | Zerlegedom | 24 | Gehäuse | 48 | --- |
| 2 | Ziehdom | 25 | Handhebel | 49 | Steuereinheit-Drosselrückschlagventil |
| 3 | geschützte Hülse mit Aufnahme | 26 | Stecksystem | 50 | 4/3 Wegeventil |
| 4 | Zangengriff | 27 | --- | 51 | 3/2 Wegeventil |
| 4a | Zangengriff | 28 | --- | 52 | --- |
| 5 | Zangengelenk | 29 | --- | 53 | --- |
| 6 | Gelenklager | 30 | Steuerbuchse | 54 | --- |
| 7 | Heber | 31 | Deckel | 55 | --- |
| 8 | kegelförmige Erweiterung | 32 | Deckel | 56 | --- |
| 9 | Ratschenklinke | 33 | Faltenbalg | 57 | --- |
| 10 | Verzahnung | 34 | Druckkfeder | 58 | --- |
| 11 | Rückholfeder | 35 | --- | 59 | --- |
| 12 | Ziehdom | 36 | --- | 60 | Balg |
| 13 | feststehender Halbdorn | 37 | --- | 61 | Klebeverbindung |
| 14 | Keilfläche | 38 | einfachwirkender Zylinder | 62 | Schlauch |
| 15 | Ratschennase | 39 | doppeltwirkender Zylinder | 63 | Verschraubung |
| 16 | Grifffläche | 40 | Antriebsaggregat | 64 | Kerbstück |
| 17 | --- | 41 | Elektromotor | 65 | Zahn |
| 18 | --- | 42 | Hydropumpe | 66 | Balg |
| 19 | Sprengkopf | 43 | Druckbegrenzungsventil | 67 | Segmentstück |
| 20 | Unterkiefer | 44 | Behälter | 68 | Verschraubung |
| 21 | Absatz | 45 | --- | 69 | Steuerbuchse |
| 22 | Schlauch | 46 | Einheit | | |
| 23 | Betätigungs- und Versorgungseinheit | 47 | --- | | |

## Patentansprüche

1. Vorrichtung zur querkraft- und biegemomentfreien Zerstörung eines Zahnes (65) mit einem in eine Bohrung des Zahnes (65) einführbaren Zerlegedorn (1; 60; 66, 67), **dadurch gekennzeichnet, daß** die Außenabmessungen des Zerlegedornes (1; 60; 66, 67) derart vergrößerbar sind, daß der Zahn (65) durch Aufbringen symmetrischer Kräfte in der Bohrung durch Innendruck gesprengt und dadurch zerlegt wird.

2. Vorrichtung nach Anspruch 1, **dadurch gekennzeichnet, daß** der Zerlegedorn (1) zwei gegeneinander bewegbare Teile (2, 3; 12, 13) mit Aufgleitflächen (8; 14) umfaßt, die bei der Bewegung der Teile gegeneinander aneinander gleiten und dadurch die Außenabmessungen des Zerlegedornes (1) vergrößern.

3. Vorrichtung nach Anspruch 2, **dadurch gekennzeichnet, daß** ein Teil eine geschlitzte Hülse (3) und das andere ein darin verschieblicher, zentrischer Zieh- oder Druckdorn (2) mit einer kegelförmigen Erweiterung (8) ist, welche eine Aufgleitfläche bildet.

4. Vorrichtung nach Anspruch 2, **dadurch gekennzeichnet, daß** ein Teil als feststehender Halbdorn (13) und das andere Teil als verschiebbarer Zieh- oder Druckdorn (12) ausgeführt wird und daß beide Teile als Aufgleitflächen aufeinandergleitende Keilflächen (14) tragen.

5. Vorrichtung nach Anspruch 2, **dadurch gekennzeichnet, daß** die beiden Teile blindnietenähnlich ausgebildet sind.

6. Vorrichtung nach einem der Ansprüche 2 bis 5, **dadurch gekennzeichnet, daß** sie eine Sprengzange ist und daß die beiden Teile (2, 3; 12, 13) durch zwei gegeneinander verschwenkbare Zangengriffe (4, 4a) der Sprengzange gegeneinander bewegbar sind.

7. Vorrichtung nach Anspruch 6, **dadurch gekennzeichnet, daß** die Sprengzange einen Ratschenmechanismus (9, 10, 11, 15) enthält, durch den der vollständige Hub der Zangengriffe (4, 4a) auf einen kleinen Teilhub der beiden Teile (2, 3; 12, 13) transformiert wird.

8. Vorrichtung nach Anspruch 7, **dadurch gekennzeichnet, daß** der Ratschenmechanismus einen Kniehebel umfaßt, der mit seinem freien Ende in eine Verzahnung (10) eingreift.

9. Vorrichtung nach einem der Ansprüche 6 bis 8, **dadurch gekennzeichnet, daß** die beiden Zangengriffe (4, 4a) in eine Löseposition (C) verschwenkbar sind, in der die beiden Teile (2, 3; 12, 13) derart gegeneinander verschoben sind, daß ihre Außenabmessungen reduziert sind.

10. Vorrichtung nach einem der Ansprüche 2 bis 9, **dadurch gekennzeichnet, daß** die beiden Teile (2, 3; 12, 13) bei der Vergrößerung der Außenabmessungen nach entgegengesetzten Seiten voneinander entfernbar sind und daß der Zerlegedorn (1) um seine Längsachse verdrehbar an der Vorrichtung gelagert ist.

11. Vorrichtung nach einem der Ansprüche 2 bis 5, **dadurch gekennzeichnet, daß** die beiden Teile (2, 3; 12, 13) zur Veränderung der Außenabmessungen des Zerlegedornes durch einen hydraulischen Antrieb gegeneinander bewegbar sind.

12. Vorrichtung nach Anspruch 11, **dadurch gekennzeichnet, daß** der hydraulische Antrieb eine motorisch angetriebene Pumpe (40, 41, 42) umfaßt.

13. Vorrichtung nach Anspruch 11, **dadurch gekennzeichnet, daß** der hydraulische Antrieb zur Erzeugung des Betätigungsdruckes für den hydraulischen Antrieb einen hand- oder fußbetätigten Hydraulikkolben (46) umfaßt.

14. Vorrichtung nach Anspruch 13, **dadurch gekennzeichnet, daß** sie ein Gehäuse (24) aufweist, welches den Zerlegedorn (1) trägt und eine Betätigungsund Versorgungseinheit (23) aufnimmt, und daß das Gehäuse (24) zusammen mit einem daran gelagerten Handhebel (25) ein zangenähnliches Handwerkzeug bildet.

15. Vorrichtung nach Anspruch 13, **dadurch gekennzeichnet, daß** der Antrieb über einen Schlauch (22) mit einer Betätigungs- und Versorgungseinheit (23) verbunden ist.

16. Vorrichtung nach Anspruch 15, **dadurch gekennzeichnet, daß** die Verbindung zwischen dem Schlauch (22) und der Betätigungs- und Versorgungseinheit (23) als Steckverbindung (26) ausgebildet ist.

17. Vorrichtung nach einem der Ansprüche 11 bis 16, **dadurch gekennzeichnet, daß** der hydraulische Antrieb einen in einer Buchse (30) abgedichtet verschiebbaren Kolben umfaßt, an dem eines der beiden verschiebbaren Teile (2; 12) gehalten ist.

18. Vorrichtung nach Anspruch 17, **dadurch gekennzeichnet, daß** in der Buchse (30) auf einer Seite des Kolbens eine Zuführung für ein hydraulisches Medium angeordnet ist, und daß der Kolben bei Zufuhr von hydraulischem Medium über diese Zuführung gegen die Wirkung einer Feder (34) in der Buchse (30) verschiebbar ist.

19. Vorrichtung nach Anspruch 17, **dadurch gekennzeichnet, daß** in der Buchse (30) auf beiden Seiten des Kolbens je eine Zuführung für ein hydraulisches Medium angeordnet ist.

20. Vorrichtung nach einem der Ansprüche 17 bis 19, **dadurch gekennzeichnet, daß** der Kolben durch einen Faltenbalg (33) gegenüber der Buchse (30) abgedichtet ist.

21. Vorrichtung nach einem der Ansprüche 11 bis 16, **dadurch gekennzeichnet, daß** der hydraulische Antrieb einen zwischen zwei Teilen (67) angeordneten, mit Hydraulikmedium füllbaren Balg (66) umfaßt, der bei Füllung die beiden Teile (67) unter Vergrößerung ihrer Außenabmessungen voneinander entfernt.

22. Vorrichtung nach Anspruch 21, **dadurch gekennzeichnet, daß** die beiden Teile (67) auseinanderschwenkbar gelagert sind.

23. Vorrichtung nach Anspruch 21 oder 22, **dadurch gekennzeichnet, daß** die beiden Teile (67) federunterstützt sind.

24. Vorrichtung nach Anspruch 1, **dadurch gekennzeichnet, daß** der Zerlegedorn einen mit einem hydraulischen Medium füllbaren Balg (60) umfaßt.

25. Vorrichtung nach Anspruch 24, **dadurch gekennzeichnet, daß** der Balg (60) kugelförmig ausgebildet ist.

26. Vorrichtung nach Anspruch 24, **dadurch gekennzeichnet, daß** der Balg (60) zylinderförmig ausgebildet ist.

27. Vorrichtung nach einem der Ansprüche 24 oder 25, **dadurch gekennzeichnet, daß** der Balg (60) seitlich aufgesetzte Kerbstücke (64) trägt.

28. Vorrichtung nach einem der Ansprüche 21 bis 27, **dadurch gekennzeichnet, daß** der Balg (60, 66) dehnbar ist.

## Claims

1. A device for the destruction of a tooth (65) free from transverse forces and bending moments, comprising a destruction bolt (1; 60; 66, 67) introduceable into a bore of the tooth (65), **characterised in that** the outer dimensions of the destruction bolt (1; 60; 66, 67) are enlargeable in such a manner that the tooth (65) is burst and thereby broken up by means of internal pressure due to application of symmetrical forces in the bore.

2. A device according to Claim 1, **characterised in that** the destruction bolt (1) comprises two parts (2, 3; 12, 13) movable relative to one another and having sliding surfaces (8; 14) which slide on one another during the movement of the parts relative to one another and thereby enlarge the outer dimensions of the destruction bolt (1).

3. A device according to Claim 2, **characterised in that** one part is a slotted sleeve (3) and the other part is a central drawing or pressure bolt (2) displaceable therein and comprising a conical extension (8) which forms a sliding surface.

4. A device according to Claim 2, **characterised in that** one part is designed as a stationary half-bolt (13) and the other part as a displaceable drawing or pressure bolt (12), and **in that** both parts bear wedge surfaces (14) sliding on one another as sliding surfaces.

5. A device according to Claim 2, **characterised in that** the two parts are designed like blind rivets.

6. A device according to one of Claims 2 to 5, **characterised in that** it is a pair of breaking forceps, and **in that** the two parts (2, 3; 12, 13) are movable relative to one another by means of two forceps handles (4, 4a) of the breaking forceps which are pivotable relative to one another.

7. A device according to Claim 6, **characterised in that** the breaking forceps include a ratchet mechanism (9, 10, 11, 15) by means of which the complete stroke of the forceps handles (4, 4a) is transformed into a small partial stroke of the two parts (2, 3; 12, 13).

8. A device according to Claim 7, **characterised in that** the ratchet mechanism comprises an elbow lever which engages in toothing (10) with its free end.

9. A device according to one of Claims 6 to 8, **characterised in that** the two forceps handles (4, 4a) are pivotable into a release position (C) in which the two parts (2, 3; 12, 13) are displaced relative to one another in such a manner that their outer dimensions are reduced.

10. A device according to one of Claims 2 to 9, **characterised in that** the two parts (2, 3; 12, 13) are adapted to be moved away from one another towards opposite sides during the enlargement of the outer dimensions, and **in that** the destruction bolt (1) is mounted on the device so as to be rotatable about its longitudinal axis.

11. A device according to one of Claims 2 to 5, **characterised in that** the two parts (2, 3; 12, 13) are movable relative to one another by means of a hydraulic drive for altering the outer dimensions of the destruction bolt.

12. A device according to Claim 11, **characterised in that** the hydraulic drive comprises a pump (40, 41, 42) driven by a motor.

13. A device according to Claim 11, **characterised in that** the hydraulic drive comprises a hydraulic piston (46) operated by hand or foot for generating the actuating pressure for the hydraulic drive.

14. A device according to Claim 13, **characterised in that** it comprises a housing (24) which bears the destruction bolt (1) and accommodates an actuating and supply unit (23), and **in that** the housing (24) together with a hand lever (25) mounted thereon forms a forceps-like hand tool.

15. A device according to Claim 13, **characterised in that** the drive is connected via a hose (22) to an actuating and supply unit (23).

16. A device according to Claim 15, **characterised in that** the connection between the hose (22) and the actuating and supply unit (23) is a plug-in connection (26).

17. A device according to one of Claims 11 to 16, **characterised in that** the hydraulic drive comprises a piston which is displaceable, sealed, in a bushing (30), one of the two displaceable parts (2; 12) being held on said piston.

18. A device according to Claim 17, **characterised in that** a supply line for a hydraulic medium is arranged in the bushing (30) on one side of the piston, and **in that** the piston is displaceable in the bushing (30) against the action of a spring (34) during the supply of hydraulic medium via this supply line.

19. A device according to Claim 17, **characterised in that** respective supply lines for a hydraulic medium are arranged in the bushing (30) on both sides of the piston.

20. A device according to one of Claims 17 to 19, **characterised in that** the piston is sealed in relation to the bushing (30) by means of a corrugated bellows (33).

21. A device according to one of Claims 11 to 16, **characterised in that** the hydraulic drive comprises a bellows (66) arranged between two parts (67) and adapted to be filled with hydraulic medium, said bellows moving the two parts (67) away from one another during filling, thereby enlarging their outer dimensions.

22. A device according to Claim 21, **characterised in that** the two parts (67) are mounted so as to be pivotable apart from one another.

23. A device according to Claim 21 or 22, **characterised in that** the two parts (67) are spring-assisted.

24. A device according to Claim 1, **characterised in that** the destruction bolt comprises a bellows (60) adapted to be filled with a hydraulic medium.

25. A device according to Claim 24, **characterised in that** the bellows (60) is of a ball-shaped design.

26. A device according to Claim 24, **characterised in that** the bellows (60) is of a cylinder-shaped design.

27. A device according to one of Claims 24 or 25, **characterised in that** the bellows (60) bears notched pieces (64) added laterally.

28. A device according to one of Claims 21 to 27, **characterised in that** the bellows (60, 66) is expandable.

## Revendications

1. Dispositif pour la destruction exempte de force de cisaillement et de moment de flexion d'une dent (65) avec un mandrin de désassemblage (1; 60; 66, 67) insérable dans un forage de la dent (56), **caractérisé en ce que** les dimensions extérieures du mandrin de désassemblage (1; 60; 66, 67) peuvent être augmentées de manière à ce que la dent (65) soit éclatée par pression interne et, de ce fait, désassemblée par l'application de forces symétriques dans le forage.

2. Dispositif selon la revendication 1, **caractérisé en ce que** le mandrin de désassemblage (1) comprend deux éléments déplaçables l'un par rapport à l'autre (2, 3; 12, 13) avec des surfaces de glissement (8; 14) qui glissent l'une par rapport à l'autre pendant le déplacement des éléments et qui augmentent ainsi les dimensions extérieures du mandrin de désassemblage (1).

3. Dispositif selon la revendication 2, **caractérisé en ce qu'**une partie est une douille fendue (3) et l'autre partie est un mandrin de traction ou de pression central (2) déplaçable dans la douille avec un élargissement conique (8) qui forme une surface de glissement.

4. Dispositif selon la revendication 2, **caractérisé en ce qu'**une partie est configurée comme un semi-mandrin fixe (13) et l'autre partie est configurée comme un mandrin de traction ou de pression (12) déplaçable et **en ce que** les deux éléments portent, comme surfaces de glissement, des surfaces en forme de coin (14) glissant les unes sur les autres.

5. Dispositif selon la revendication 2, **caractérisé en ce que** les deux éléments sont configurés avec un rivetage aveugle identique.

6. Dispositif selon l'une quelconque des revendications 2 à 5, **caractérisé en ce que** le dispositif est un davier d'éclatement et **en ce que** les deux éléments (2, 3; 12, 13) sont déplaçables l'un par rapport à l'autre à l'aide de deux branches de davier (4, 4a) du davier d'éclatement pivotant l'une par rapport à l'autre.

7. Dispositif selon la revendication 6, **caractérisé en ce que** le davier d'éclatement comprend un mécanisme à cliquet (9, 10, 11, 15) grâce auquel la course totale des branches de davier (4, 4a) est transformée en une petite course partielle des deux éléments (2, 3; 12, 13).

8. Dispositif selon la revendication 7, **caractérisé en ce que** le mécanisme à cliquet comprend une genouillère dont l'extrémité libre s'engrène dans une denture (10).

9. Dispositif selon l'une quelconque des revendications 6 à 8, **caractérisé en ce que** les deux branches de davier (4, 4a) peuvent pivoter dans une position de desserrage (C) dans laquelle les deux éléments (2, 3; 12, 13) sont déplacés l'un par rapport à l'autre de manière à ce que leurs dimensions extérieures soient réduites.

10. Dispositif selon l'une quelconque des revendications 2 à 9, **caractérisé en ce que** les deux éléments (2, 3; 12, 13) peuvent être éloignés l'un de l'autre vers des côtés opposés, lors de l'augmentation des dimensions extérieures, et **en ce que** le mandrin de désassemblage (1) est logé dans le dispositif de manière mobile autour de son axe longitudinal.

11. Dispositif selon l'une quelconque des revendications 2 à 5, **caractérisé en ce que** les deux éléments (2, 3; 12, 13) sont déplaçables l'un par rapport à l'autre par un entraînement hydraulique pour modifier les dimensions extérieures du davier d'éclatement.

12. Dispositif selon la revendication 11, **caractérisé en ce que** l'entraînement hydraulique comprend une pompe entraînée par un moteur (40, 41, 42).

13. Dispositif selon la revendication 11, **caractérisé en ce que** l'entraînement hydraulique comprend un piston hydraulique (46) actionné à la main ou par le pied pour générer la pression de commande pour l'entraînement hydraulique.

14. Dispositif selon la revendication 13, **caractérisé en ce qu'**il comporte un boîtier (24) qui porte le davier d'éclatement (1) et qui reçoit une unité de commande et d'alimentation (23) et **en ce que** le boîtier (24), avec le levier manuel logé dedans (25), forme un outil à main semblable à un davier.

15. Dispositif selon la revendication 13, **caractérisé en ce que** l'entraînement est raccordé à une unité de commande et d'alimentation (23) par un tuyau flexible (22).

16. Dispositif selon la revendication 15, **caractérisé en ce que** le raccordement entre le tuyau flexible (22) et l'unité de commande et d'alimentation (23) est configuré comme une connexion mâle-femelle (26).

17. Dispositif selon l'une quelconque des revendications 11 à 16, **caractérisé en ce que** l'entraînement hydraulique comprend un piston déplaçable de manière étanche dans un coussinet (30) dans lequel est maintenue l'un des deux éléments déplaçables (2; 12).

18. Dispositif selon la revendication 17, **caractérisé en ce qu'**une alimentation pour un fluide hydraulique est installée dans le coussinet (30) d'un côté du piston et **en ce que** le piston est déplaçable dans le coussinet (30) contre l'action d'un ressort (34) en cas d'amenée d'un fluide hydraulique par cette alimentation.

19. Dispositif selon la revendication 17, **caractérisé en ce qu'**une alimentation pour un fluide hydraulique est installée dans le coussinet (30) des deux côtés du piston.

20. Dispositif selon l'une quelconque des revendications 17 à 19, **caractérisé en ce que** le piston est étanché par rapport au coussinet (30) à l'aide d'un soufflet en accordéon (33).

21. Dispositif selon l'une quelconque des revendications 11 à 16, **caractérisé en ce que** l'entraînement hydraulique comprend un soufflet (66) remplissable avec un fluide hydraulique monté entre deux éléments (67) qui, lors du remplissage, éloigne les deux éléments (67) l'un de l'autre en augmentant leurs dimensions extérieures.

22. Dispositif selon la revendication 21, **caractérisé en ce que** les deux éléments (67) sont logés de manière à s'écarter l'une de l'autre par pivotement.

23. Dispositif selon la revendication 21 ou 22, **caractérisé en ce que** les deux éléments (67) reposent sur un ressort.

24. Dispositif selon la revendication 1, **caractérisé en ce que** le mandrin de désassemblage comprend un soufflet remplissable avec un fluide hydraulique (60).

25. Dispositif selon la revendication 24, **caractérisé en ce que** le soufflet (60) a une configuration sphérique.

26. Dispositif selon la revendication 24, **caractérisé en ce que** le soufflet (60) a une configuration cylindrique.

27. Dispositif selon l'une quelconque des revendications 24 ou 25, **caractérisé en ce que** le soufflet (60) porte des pièces entaillées (64) posées latéralement.

28. Dispositif selon l'une quelconque des revendications 21 à 25, **caractérisé en ce que** le soufflet (60, 66) est extensible.
